# EUROPEAN PATENT SPECIFICATION

(11) **EP 3 833 723 B1**
(45) Date of publication and mention of the grant of the patent: **01.10.2025**
(21) Application number: 19756282.0
(22) Date of filing: 02.08.2019
(51) Int. Cl.: C09J 163/00, C08G 59/50

(54) **TWO-COMPONENT ADHESIVE COMPOSITION BASED ON EPOXIDE RESIN**
ZWEIKOMPONENTEN-KLEBSTOFFZUSAMMENSETZUNG AUF EPOXIDHARZBASIS
COMPOSITION ADHÉSIVE À DEUX COMPOSANTS À BASE DE RÉSINE ÉPOXYDE

(30) Priority: 08.08.2018 FR 1857395
(43) Date of publication of application: 16.06.2021
(73) Proprietor: Illinois Tool Works, Inc., Glenview, Illinois 60025 (US)
(72) Inventor: QUERCY JOUVET, Sophie, Glenview, Illinois 60025 (US); MARASCO, Jean-Paul, Glenview, Illinois 60025 (US); BEZIE, Hugues, Glenview, Illinois 60025 (US)
(74) Representative: HGF
(86) International application number: PCT/US2019/044873
(87) International publication number: WO 2020/033258

(56) References cited:
- EP-A1- 1 557 455
- EP-A1- 2 366 738
- US-B1- 6 248 204

## Description

### Priority

This application claims priority to and the benefit of French Patent Application No. 1857395, filed August 8, 2018.

### Field

The invention relates to a two-component adhesive composition and the use thereof as adhesive, especially for anchoring threaded rods or studs intended to support heavy loads in different types of support materials and also for taking up concrete reinforcing bars intended to reinforce concrete works and structures.

Another subject of the invention is an adhesive kit, comprising a two-component composition according to the invention, contained within a cartridge consisting of two compartments, a static mixer by means of which the components A and B are transported and brought into contact, and an applicator making it possible to extrude the components A and B from their respective compartment. The applicator may be manual, electric or pneumatic.

### Background

With chemical anchoring, a resin is injected into the hole before the stud is inserted. By virtue of this, the chemical product naturally fills all the irregularities, thereby makes the hole 100% leaktight, and also thereby reinforces the support material. Chemical anchorings have a virtually unlimited anchoring depth, such that rods or reinforcing bars of any length and diameter may be inserted into the hole to increase the loading capacity. However, beyond a certain anchoring depth, the steel will rupture before the adhesive ruptures, which naturally limits the anchoring depths of the seals.

Chemical anchorings may also be placed towards the edge of substrates made of concrete, cement, stone, brick, and through masonry blocks for example. The non-expansive nature of a rod held by chemical anchoring considerably reduces the risks of cracking and shattering of the slab angles or edges of said surrounding substrate. The use of chemical anchoring is particularly suited to the attachment of balustrades to shallower slabs, or stairs made of mineral substrate such as concrete, and similar applications. Finally, chemical anchoring makes it possible to make slight adjustments to the alignment of the bars, reinforced rods, threaded rods, etc., while the product is curing, which period is referred to as open time.

Two-component epoxy-based chemical anchorings available on the market fall into two categories. Epoxy resins with very rapid curing, which cure with thiol components or phenol components, constitute the first category. The thiol fragments are most reactive to the epoxides, but their reaction leads to thermosets having intermediate performance. Moreover, due to the presence of sulfur, the thiols have a persistent and unpleasant odor. Phenols have long been used to treat epoxide resins and lead to high performance properties, but they are worrying for human health and the environment due to their classifications as CMR (carcinogenic, mutagenic and reprotoxic) and SVHC (substance of very high concern). The second category is that of epoxide resins that cure with other types of hardeners such as polyamines and polyamides, which are much more latent, require long curing times or the supply of external heat, but which lead to high bonding strengths. A two-component adhesive composition suitable for use in anchoring materials in or to concrete or masonry is known from EP2366738 A1.

In the field of application concerned by the disclosure, the resins are used in combination with various additives and fillers to give the final mixed product a particular texture. The required texture must enable the extrusion of the product out of its container and the easy mixing thereof with the applicators, even at low temperatures, for example from 0 to 10°C. The required texture must also enable installations in the vertical direction, in particular for ceiling placements. Suitable thixotropy will ensure the weight of the stud or reinforcing bar will be held during the setting time of the mixture, excluding any leakage or drop just after installation of the bars, reinforced rods, threaded rods, etc.

In order to achieve good physical stability over time and good thixotropy, the formulations usually comprise components of high molecular weight which are more compatible and are less likely to become separated from the other components of the formulation. Thus, it is common to use modified amines or epoxides, that is to say epoxides or amines in the form of adducts, which are produced by addition reaction with a separate molecular entity, giving a single product which contains all the initial atoms but differently bonded to one another. In general, adducts are more stable and much easier to formulate and to stabilize. However, they are much less reactive than grades that have not been modified, especially by addition reactions (non-adducted). Moreover, adducts provide much higher viscosities, enabling the incorporation of lower contents of fillers.

Polyfunctional epoxide resins (containing three or more functionalities) are also quite viscous and require the provision of temperature in order to be used. Some grades may also crystallize at low temperature, especially in a range extending from 0°C to 10°C, if they are not combined with reactive diluents, making it possible to form a eutectic mixture, the melting point/crystallization temperature of which will advantageously be lowered. Under unfavorable working conditions. the crystallization and the high-viscosity pastes do not enable easy application of the product for the user, and inhibit the adhesion properties of the resins, typically at low temperatures such as 5°C or less.

### Summary

There is therefore a real need for an adhesive composition, in particular for anchoring studs and taking up concrete reinforcing bars,
- having good or even excellent adhesion in a mineral substrate such as concrete, cement, stone, mortar or bricks, which can be used easily and simply between 5°C and 40°C upon placement, and in temperature ranges of the seals in service ranging from -40°C to 80°C;
- capable of penetrating and filling the finest cracks, especially in the case of damaged or cracked concretes, the cracks possibly having openings up to 0.8 mm, in static or dynamic mode;
- which can react, creating strong and irreversible chemical bonds in order to form a thermosetting material consisting of a homogeneous, dense, infusible and insoluble network, but also strong bonds at the interface with the rod/reinforcing bar one the one hand and the support on the other hand, in a wide range of temperatures (for example ranging from 5 to 40°C), preferably at ambient temperature (that is to say 21 ± 3°C);
- having good applicability, that is to say having sufficient viscosity to avoid flow phenomena even during an application in vertical positions or on ceilings, but also with a texture and consistency suited to manual deposition, especially affording users easy extrusion over the whole range of temperatures of use recommended by the manufacturer;
- having a hardening time or open time (gelling time) suited to series placement work (≤ 15 minutes at ambient temperature, that is to say 21 ± 3°C). Indeed, if the gelling time is too quick, the user will not have time to insert their rod under good conditions, and the hole will have to be pierced again. On the other hand, if the gelling time is too long, the steps following the installation will be affected thereby.
- having a time to loading (total polymerization time) enabling loading on the same day as or the day after the installation (≤ 7 hours), thereby reducing stoppage times and enabling the correct continuation of the work in the allocated time;
- which is resistant to chemical products, water and freezing/thawing cycles after curing;
- having good adhesion behavior at high temperatures which may extend up to 80°C over short periods or up to 50°C over longer periods, and under unfavorable conditions such as moist environments, supports which are damaged, cracked, submerged in water, dusty and cold, in particular down to 5°C;
- having good dimensional stability, that is to say with an absence of shrinkage, avoiding any detachment of the concrete walls which could cause a significant lowering of adhesion.

The invention is defined in the appended claims. The aim of the present invention is precisely to meet these needs by providing a two-component adhesive composition, in particular for anchoring materials, comprising:
a component **A** comprising
   - from 50 to 60% by weight of the part A, preferably 52 to 58% of at least one curable epoxide resin,
   - from 1 to 10% by weight of the part A, preferably from 2 to 6% of at least one diluent for the epoxide resin having a viscosity of the order of 10 to 200 mPa.s, at 25°C according to ISO 3219, selected from the diglycidyl ethers,
   - from 2 to 20% by weight of the part A, preferably from 4 to 16% of trimethylolpropane triacrylate (TMPTA) and at least one compound of acrylate type, having a functionality of between 1 and 6, preferably 2 and 5, limit values included; and
a component **B** comprising
   - from 18 to 28% by weight of the part B, preferably from 20 to 25% of at least one hardener (or curing agent) for the epoxide resin, selected from unmodified or non-adducted amines,
   - from 15 to 25% by weight of the part B, preferably from 18 to 23% of at least one accelerator (or activating agent) for the epoxide resin, selected from tertiary amines, modified (or substituted) phenolic compounds, sulfonic acids, salicylic acids, linear aliphatic amines that are not adducts with an epoxide compound, compounds containing the imidazole functionality, compounds containing the toluidine functionality.

The weight ratio of the component **A** to the component **B** may be between 1.5:1 and 1.8:1, preferably 1.7:1.

According to a preferred embodiment of the invention, the component **A** comprises a mixture of two compounds of acrylate type, including trimethylolpropane triacrylate (TMPTA).

According to a preferred embodiment of the invention, the component **B** comprises at least unmodified or non-adducted norbornane diamine as hardener (or curing agent) for the epoxide resin.

According to a preferred embodiment of the invention, the component **B** comprises a mixture of accelerators (or activating agents) for the epoxide resin selected from tertiary amines, modified phenolic compounds, sulfonic acids or salicylic acids and the esters thereof.

"Curable" epoxide resin is intended to mean an epoxide resin capable of being irreversibly polymerized or crosslinked (under the action of heat or UV for example), leading to a product having a stable three-dimensional structure (network) and having thermomechanical and chemical resistance.

The two-component adhesive composition according to the invention may be distributed in holes of a mineral substrate, for instance concrete, cement, stone, mortars, bricks, for chemical anchoring, the function of which is to reinforce said mineral substrate with reinforcement bars, reinforced rods, threaded rods, etc., or to take up heavy loads in works. The adhesive composition of the invention may cure over a wide range of temperatures (5 to 40°C), with a rapid open time (≤ 15 minutes) at ambient temperature (that is to say 21 ± 3°C). It has good adhesion behavior at high temperature (80°C) and under unfavorable conditions, such as moist, dusty and cold environments, submerged holes or cracked concrete.

The two-component adhesive composition according to the invention has a compressive mechanical strength ranging from 100 to 120 MPa according to standard NF EN ISO 604, a flexural mechanical strength ranging from 30 to 40 MPa according to standard NF EN ISO 178 and a Shore hardness ranging from 75 to 85 according to standard NF EN ISO 868.

### Detailed Description

### COMPONENT A

### Epoxide resin and diluent

For the purposes of the invention, the term "epoxide (or epoxy) resins" denotes a compound or a combination of two or more compounds bearing at least one, preferably at least two, reactive epoxide (oxirane) groups. Said resins preferably have on average at least 1.5 polymerizable epoxide groups per molecule, and even more preferably two epoxide groups per molecule. The epoxide resins may comprise linear polymers having terminal epoxides (for example a diglycidyl ether of a polyoxyalkylene glycol), polymers having oxirane units (for example polybutadiene polyepoxide) and polymers having pendant epoxides (for example a polymer or copolymer of glycidyl methacrylate). The epoxide resins may be pure compounds but are generally combinations of two or more compounds containing one, two or more epoxide groups per molecule. The "mean" number of epoxide groups per molecule is determined by dividing the total number of epoxide groups in the resin by the total number of epoxide compounds present.

The molecular weight of epoxide resins may vary from 50 to 100 000 g/mol or more. For the present invention, the molecular weights of the resins used are advantageously from 50 to 700 g/mol.

The epoxide resins that may be suitable in the present invention are readily accessible. They may be chosen from novolac epoxide resins, octadecylene oxide, glycidyl methacrylate, glycidyl acrylate, bisphenol A diglycidyl ether, bisphenol F diglycidyl ether (for example those available under the trade names EPON 828, EPON 1004 and EPON 1010 from Hexion, DER-331, DER-332, and DER-334, from Dow Chemical Co.), vinylcyclohexene dioxide (for example ERL-4206 from Union Carbide Corp., The Dow Chemical Co.), 3,4-epoxycyclohexylmethyl-3,4-epoxycyclohexane carboxylate (for example ERL-4221 from Union Carbide Corp., The Dow Chemical Co.), 3,4-epoxy-6-methylcyclohexylmethyl-3,4-epoxy-6-methylcyclohexene carboxylate (for example ERL-4201 from Union Carbide Corp., The Dow Chemical Co.), bis(3,4-epoxy-6-methylcyclohexylmethyl) adipate (for example ERL-4289 from Union Carbide Corp., The Dow Chemical Co.), bis(2,3-epoxycyclopentyl) ether (for example ERL-0400 from Union Carbide Corp., The Dow Chemical Co.), aliphatic epoxide modified with propylene glycol (for example ERL-4050 and ERL-4052 from Union Carbide Corp., The Dow Chemical Co.), dipentene dioxide (for example ERL-4269 from Union Carbide Corp., The Dow Chemical Co.), epoxidized polybutadiene (for example OXIRON 2001 from FMC Corp.), a silicone resin containing an epoxy functionality, flame-retardant epoxide resins (for example DER-580), an epoxy resin of bromobisphenol type (available from Dow Chemical Co.), 1,4-butanediol diglycidyl ether of phenol formaldehyde novolac (for example DEN-431 and DEN-438 from Dow Chemical Co.), and resorcinol diglycidyl ether and mixtures of at least two of the abovementioned. Some preferred embodiments use a mixture of bisphenol F diglycidyl ethers and bisphenol A diglycidyl ethers (for example those available under the trade name DER-352 from Dow). This type of mixture in particular makes it possible to lower the melting points/crystallization temperatures and avoid crystallization phenomena which may arise at temperatures lower than 10°C, with the bisphenol A epoxy resin alone, in particular.

The resin grades suitable for the present invention, beyond their excellent adhesion performance, must have a viscosity enabling working in the temperature range from 5°C to 40°C. The viscosity range measured at 25°C according to ASTM D-445 is 5000 to 10 000 mPa.s, and more particularly 5700 to 7700 mPa.s. The molecular weights targeted to enable correct formulation without resorting to heating must be less than 1000 g/mol, the epoxy equivalent weight being between 160 and 200 g/eq, preferably 172 to 181 g/eq according to ASTM D-1652.

The epoxide diluents are used as viscosity reducers for the epoxy resin. Their not particularly hindered molecular structure and their low molecular weight make it possible for them to play an effective role in diluting epoxide resins, while becoming incorporated in the network formed during the addition reaction by virtue of the presence of at least two reactive epoxide rings. Their functionality must be at least 2, such that the molecule is incorporated into the network formed during the reaction with the amines and components of the hardener, and make it possible to retain good resistance to chemical agents and temperature. The epoxy diluents have viscosities of the order of 10 to 200 mPa.s, at 25°C according to ISO 3219, preferably 10 to 20 mPa.s. The diluent for the epoxide resin that may be suitable in the compositions of the invention may be chosen from diglycidyl ethers, triglycidyl ethers or glycidyl ether with oxirane functionalities that may extend up to 5. Preferably, the epoxide diluent is chosen from hexanediol diglycidyl ether, 1,4-butanediol diglycidyl ether (Epotec RD103 from Aditya Birla Chemicals), 1,4-cyclohexanedimethanol diglycidyl ether (IPOX RD 11 from IPOX Chemicals), resorcinol diglycidyl ether, cyclohexanedimethanol diglycidyl ether, neopentyl glycol diglycidyl ether, dodecyl glycidyl ether or tetradecyl glycidyl ether, trimethylolpropane triglycidyl ether (DER 741 from Palmer Holland, Olin, The Dow Chemical Co.), glycerol-3-polyglycidyl ether (IPOX CL12 from Ipox Chemicals), trimethylolpropane polyglycidyl ether and pentaerythritol polyglycidyl ether.

The present composition will be composed of an epoxy resin and a polyfunctional, preferably difunctional, epoxy diluent. Said diluent is more particularly 1,4-butanediol diglycidyl ether.

In component A, the total amount of epoxide resin(s) is from 50 to 60% by weight of the part A, preferably 52 to 58% by weight of the part A.

The total amount of diluent(s) in the component A is from 1 to 10%, preferably from 2 to 6% by weight of the part A.

### Acrylate diluent compounds

As already mentioned, at least one of the compounds of the adhesive composition of the present invention is the mixture of compounds of polyfunctional acrylate type, including trimethylolpropane triacrylate (TMPTA), present in the component **A.**

Without wishing to be bound by any theory, the mixture of polyfunctional acrylates of the present invention may act, for some of them, as viscosity reducer with viscosities in a typical range from 50 to 150 mPa.s, more particularly 80 to 130 mPa.s, according to ISO-3219. The advantages in incorporating polyfunctional acrylate compounds are varied:
- providing numerous effective crosslinking sites for the adhesive composition when it cures, thereby improving the density of the network formed and consequently other physical properties of the cured adhesive composition such as breaking strength and resistance to chemical agents;
- increasing the reactivity of the system by virtue of the high reactivity of the acrylate functionalities to the primary amine functions, present in the part B) hardener. In particular, the acrylates also have good reactivity at low temperatures such as 0 to 10°C, and promote the correct progression of the polymerization. The acrylate-amine reaction kinetics are less temperature-dependent than the epoxy-amine reaction. However, the immediate reaction of the acrylates and the primary amines must be controlled by the concentration levels of entities introduced into the composition. This is because at too great an amount, the acrylate functionalities create strong bonds which lead to a sudden viscosity increase which shortens the gelling time or open time, then consequently reduces the working time available for installing bars, reinforced rods, threaded rods in the hole. The reaction of the acrylates with the amine (hardener present in the component **B)** occurs by a Michael-type addition.

The acrylate compounds have a functionality of between 1 and 6, preferably 2 and 5, limit values included, and may be chosen from trimethylolpropane triacrylate (TMPTA), tricyclodecane dimethanol diacrylate, dipentaerythritol pentaacrylate and triisocyanurate triacrylate, tricyclodecanedimethanol dimethacrylate, 1,6-hexanediol diacrylate, dipropylene glycol diacrylate, ethoxylated bisphenol A diacrylate, polyethylene glycol diacrylate, propoxylated neopentyl glycol diacrylate, tetraethylene glycol diacrylate, triethylene glycol diacrylate, tripropylene glycol diacrylate, 1,3-butylene glycol dimethacrylate, 1,4-butanediol dimethacrylate, 1,6-hexanediol dimethacrylate, ethoxylated bisphenol A dimethacrylate, polyethylene glycol dimethacrylate, tetraethylene glycol dimethacrylate, triethylene glycol dimethacrylate, ethylene glycol dimethacrylate and diethylene glycol dimethacrylate, optionally ethoxylated or propoxylated trimethylolpropane triacrylate, ethoxylated pentaerythritol triacrylate, propoxylated glyceryl triacrylate, trimethylolpropane trimethacrylate, or a mixture of at least two of those mentioned above.

The component A comprises a mixture of trimethylolpropane triacrylate (TMPTA) and another compound of acrylate type having a functionality of between 1 and 6, preferably 2 and 5, limit values included.

In particular, the combination of trimethylolpropane triacrylate, sold under the trade name SR-351 by Sartomer, European division of Arkema, and dipentaerythritol pentaacrylate, sold under the trade name SR-399 by Sartomer, makes it possible to meet the expectations for the composition in terms of:
- reactivity and degree of progression of the reaction in the temperature range of use of the product, that is to say 5°C to 40°C;
- reactivity and degree of progression of the reaction at 5°C, especially by virtue of the presence of the trimethylolpropane triacrylate, which is particularly reactive by virtue of its lower molecular weight and its low steric hindrance;
- reactivity and degree of progression of the reaction, making it possible to achieve at least 90% conversion of the reagents into a product of the addition reaction of these reagents (that is to say an insoluble and infusible crosslinked network), at 20°C after seven hours;
- mechanical performance, the polyfunctionality leading to a dense network that spreads out in all three spatial dimensions;
- resistance to chemical agents and good properties of adhesion and wettability by virtue of the presence of hydroxyl functional groups;
- reduction and limitation of the reaction exothermy generated by the epoxy-amine polyaddition.

According to a preferred embodiment of the invention, the component A comprises a mixture of two compounds of acrylate type: trimethylolpropane triacrylate and dipentaerythritol pentaacrylate.

Each of these polyfunctional acrylates comprises an inhibitor, in particular methyl hydroquinone, at a concentration of between 350 and 500 ppm for the pentaacrylate and less than 100 ppm for the triacrylate, based on the total weight of the acrylate and the inhibitor. Indeed, since the acrylates can also react by radical polymerization (for example under the effect of UV radiation), it is essential to prevent this reaction and retain their full potential for the desired reaction with the part B, with the inhibitor playing a sacrificial role.

The total amount of compound(s) of acrylate type in the component A is from 2 to 20% by weight of the part A, preferably from 4 to 16%.

### COMPONENT B

### Hardener (or curing agent)

In the adhesive composition of the invention, one of the compounds of the component **B** of the adhesive composition of the invention is the hardener or curing agent for the epoxide resin, selected from unmodified or non-adducted amines.

Said curing agent comprises at least one unmodified or non-adducted amine. The unmodified or non-adducted amine(s) comprise on average more than two hydrogen atoms that are active in relation to the epoxide resin. The amines used may be primary, secondary or tertiary. Preferably, the unmodified or non-adducted amine(s) are aliphatic or cycloaliphatic amines due to their good reactivity, unlike the reactivity of aromatic amines. Indeed, in the order of reactivity, acyclic (or linear) aliphatic amines are the most reactive due to their low steric hindrance. However, they lead to flexible networks and must, for our applications, be combined with amines that can provide more stiffness. Cyclic aliphatic (or cycloaliphatic) amines contain non-aromatic rings, slowing their reactivity compared to linear aliphatic amines, but providing them with stiffness and chemical and mechanical resistance. Aromatic amines consist of aromatic rings, providing them with excellent mechanical and thermal properties but very slow reaction rates (these amines must often be temperature-activated). Aromatic amines are hazardous to human health and are classified as CMR.

The choice of the composition of the part B of the present invention combines small amounts of acyclic aliphatic amine, providing good reaction reactivity, in particular diethylenetriamine and triethylenetetramine, with an unmodified or non-adducted cycloaliphatic amine, providing the stiff structure and density of the network of the reaction product, for example m-xylylenediamine from Mitsui Fine Chemicals Inc., and more particularly norbornane diamine from Mitsui Fine Chemicals, Inc., which provides good adhesion performance at 80°C.

An adduct is the product of an addition reaction between two reactive compounds, each of which is intentionally present in excess or deficiency relative to the other in order that the final product is already sufficiently branched and thus comprises functionalities which may further react, with molecular weights that are increased relative to pure compounds, which are chemically and physically stabilized. The benefit to manufacturers of proposing adducted or modified grades makes it possible to solve the problems identified by formulators, in particular
- greater ease of use and incorporation,
- better storage stability, and
- better stability once in the formulation.

However, adducts have some drawbacks, including a much higher viscosity than that which may be afforded by pure compounds. The fact that the viscosity levels of adducts are at least ten times greater than those of pure compounds enables the incorporation of lower contents of fillers. Finally, due to the molecular weights and hindered nature of adducted molecules, their reactivity is greatly affected thereby. Adducts, despite the possible combination with accelerators, have a latency which is inherent to their nature.

The hardener (or curing agent) for the epoxide resin is therefore an aliphatic or cycloaliphatic unmodified or non-adducted amine which may be selected from 1,3-benzenedimethanamine, norbornane diamine (NBDA), diethylenetriamine (DETA), triethylenetetramine (TETA), 1,3-cyclohexanebis(methylamine), bis(4-aminophenyl)methane, benzylamine, propane-1,3-diamine, 2,2-dimethyl-1,3-propanediamine (neopentanediamine), hexamethylenediamine, bis(3-aminopropyl)amine, N,N-bis(3-aminopropyl)methylamine, tetraethylenepentamine, pentaethylenehexamine, 2,2,4-trimethylhexane-1,6-diamine, m-xylylenediamine, 1,2- and 1,4-diaminocyclohexane, bis(4-aminocyclohexyl)methane, bis(4-amino-3-methylcyclohexyl)methane, 2,2-bis(4-aminocyclohexyl)propane, 3-aminomethyl-3,5,5-trimethylcyclohexylamine (isophorone diamine) or a mixture of at least two of those mentioned above.

According to a preferred embodiment of the invention, the hardener (or curing agent) for the epoxide resin is an unmodified or non-adducted amine containing at least norbornane diamine.

According to another preferred embodiment of the invention, the unmodified or non-adducted amine is norbornane diamine.

The choice of incorporating a hardener (or curing agent) belonging to the family of aliphatic and cycloaliphatic unmodified amines has a positive impact on the initial viscosity, the reactivity and the adhesion at high temperatures, typically 80°C. However, the physical stability of the formulation must be tightly controlled in order to avoid any phenomenon of liquid/solid separation.

For example, the choice may be focused in particular on the use of non-adducted or unmodified norbornane diamine (NBDA) as one of the main components of the part B), the hardener of the composition.

The total amount of unmodified or non-adducted amine hardener(s), preferably of unmodified or non-adducted norbornane diamine, in the component **B** is from 18 to 28% by weight of the part **B,** preferably from 20 to 25%.

### Accelerator (or activating agent)

In the adhesive composition of the invention, one of the compounds of the component **B** of the adhesive composition of the invention is the accelerator or activating agent for the epoxide resin.

The adhesive composition of the present invention can be cured more easily and more quickly by adding one, or a mixture of at least two, accelerators or activating agents. Representative accelerators may contain substituted (or modified) phenolic compounds, sulfonic acids, salicylic acids, tertiary amines, linear aliphatic amines that are not adducts with an epoxide compound, compounds containing the imidazole functionality, compounds containing the toluidine functionality.

The accelerator (or activating agent) for the epoxide resin may therefore be selected from styrenated phenol, resorcinol, salicylic acid, acetylsalicylic acid, 2-piperazin-1-ethylamine, para-toluenesulfonic acid, esters of sulfonic acid such as methyl-4-toluenesulfonate, bis(dimethylaminoethyl)piperazine, N,N'-dimethylpiperazine, dimethylaminomethylphenol, 2,4,6-tris(dimethylaminomethyl)phenol, 2,4,6-tris((3-(dimethylamino)propyl)aminomethyl)phenol, 1-methylimidazole, 1-ethylimidazole, 1-vinylimidazole, 2-methylimidazole, 2-ethylimidazole, 2-isopropylimidazole, heptadecylimidazole, 2-ethyl-4-methylimidazole, 1-benzyl-2-methylimidazole, N,N-dimethylaniline, N,N-dimethyl-o-, -m-, -p-toluidine, N,N-diethylaniline, N,N-diethyl-o- -m-, -p-toluidine, N,N-di(2-hydroxyethyl)-p-toluidine, N,N-bis(2-hydroxyethyl)-p-toluidine, N,N-bis(2-hydroxypropyl)-p-toluidine or a mixture of at least two of those mentioned above. In the mixture of at least two accelerators (or activating agents), the styrenated phenol assumes multiple roles, since beyond its function as accelerator it acts as a compatabilizer and reaction facilitator by virtue of its three-dimensional structure.

According to a preferred embodiment of the invention, the component B comprises an accelerator (or activating agent) or a mixture of at least two accelerators for the epoxide resin, selected from
- tertiary amines, in particular, 2-piperazin-1-ethylamine, 2,4,6-tris(dimethylaminomethyl)phenol,
- modified (or substituted) phenolic compounds, in particular, styrenated phenol or resorcinol,
- sulfonic acids and esters thereof, such as methyl-4-toluenesulfonate, in particular para-toluenesulfonic acid,
- sulfonic acids and esters thereof, in particular para-toluenesulfonic acid and methyl-4-toluenesulfonate,
- salicylic acid,
- linear aliphatic amines that are not adducts with an epoxide compound, in particular diethylenetriamine and triethylenetetramine.

The total amount of accelerator(s) in the component **B** is from 15 to 25% by weight of the part **B,** preferably from 18 to 23%.

The two-component adhesive composition according to the invention may also comprise one or more thixotropic agents, one or more fillers, one or more inhibitors present in the resin part A), one or more pigments, present in the resin part, in order to visualize the mixing of dark part A) and light part B) through the static mixer at the time of application of the adhesive composition.

### Thixotropic agents

The thixotropic agent causes the composition to become more fluid, that is to say less viscous, when it is stirred or mixed or in other words when it is subjected to shearing forces. Thixotropy is the modification of the flow rheology of a material, which varies as a function of the shear stress and time. Shearing leads to destructuring by breaking weak, reversible bonds or Van der Waals interactions, leading to flowing. This property is reversible; namely, when the shearing stress returns to zero (rest state), the low energy bonds reform, leading to the restructuring of the material as it was in its initial state. The use of a thixotropic agent both in the resin part A and in the hardener part B is necessary in order to ensure:
- on the one hand a viscosity level and thixotropy properties that are compatible with the respective packaging operations of each of the two resin and hardener parts of the composition. The product must be able to flow in an entirely controlled manner, under the pressure of the dosing pump, in order to dispense the precise volume of material into each resin and hardener container;
- on the other hand, good physical storage stability, by limiting, by virtue of Van der Waals interactions, the sedimentation of the various solid components of the composition;
- moreover, during application, the presence of the thixotropic agent makes it possible to reduce the extrusion force by lowering the level of pressure required to reach the flow threshold without however increasing the viscosity;
- finally, immediately after application of the composition, the return to the rest state enables the mixture of the composition injected into the hole to rapidly restructure, preventing phenomena of dripping of the product or dropping of bars or rods, specifically when the latter are placed in a ceiling.

The thixotropic agent may be in the adhesive composition in an amount in the range extending from 2.5 to 4.0% by weight, preferably from 2.7 to 3.5% by weight relative to the total weight of the composition.

Typically, the use of thixotropic agents is not necessary when the anchoring composition is dispensed using a glass capsule. An example of a suitable preferred thixotropic agent is modified fumed silica obtained by flame pyrolysis at temperatures of greater than 1500°C, silicon tetrachloride or quartz. Depending on the nature of the composition, it may be hydrophilic or hydrophobized by reaction with reactive silanes. Other suitable thixotropic agents include various organic clays, fibers of mineral nature (glass fibers) or organic nature (aramid or polyolefin fibers), or organic waxes such as amide waxes. In some anchoring compositions, the thixotropic agent may also be considered to be a filler. A suitable silica thixotropic agent is Aerosil^{®} R202, which can be obtained from Evonik Industries AG, or Cabosil TS-720 from Cabot Corp. It is also envisioned that more than one thixotropic agent might be used in the adhesive composition of the invention.

### Fillers

The adhesive composition of the present invention may also comprise one or more fillers. The fillers are typically added to the compositions for various reasons, especially to reduce the phenomenon of shrinkage of the composition which may occur during polymerization. Fillers make it possible, in composite materials, to provide structure by increasing the moduli of the thermosetting or thermoplastic matrices. They are also used to reduce the cost of the composition since fillers replace a portion of the more costly components of the adhesive composition. Generally speaking, the filler is an inert, inorganic, solid and particulate compound. Inert is intended to mean that the filler does not negatively interact with any other component of the composition. Examples of suitable fillers include, without being limited thereto, ground glass, glass beads, quartz, silica, limestone, alumina, various clays, diatomaceous earth and other materials such as mica, silex powder, kryolite, alumina trihydrate, talc, sand, pyrophyllite, barium white, granulated polymers such as polyethylene, hollow glass and polymer beads, zinc oxide, novaculite, calcium sulfate and mixtures thereof. They may be chosen, depending on the desired properties, as a function of their hardness, their geometry but also their particle size distribution. The preferred fillers are quartz, glass and silica. The fillers may be treated with coupling agents to improve bonding to the polymer matrix. Examples of coupling agents which may be used to treat the fillers are silanes, titanates and zirconates.

The adhesive composition of the invention contains fillers from 10 to 80% by weight, preferably from 20% to 70% by weight, and more preferentially from 34 to 40% by weight relative to the total weight of the composition.

The size of particles of the filler will depend on the desired consistency of the composition and on the process for dispensing the adhesive composition. For example, fillers having a high mean particle size (500 µm (microns) and above) may clog the static mixers which are used in dispensing systems such as pistols. On the other hand, fillers having a large particle size may be used in glass capsules. The preferred particle sizes may range from 50 to 450 µm (microns). In particular, in cases in which a filler is used to prevent the deposition and separation of other particles in a composition, for the sake of promoting the correct flow of all the components simultaneously and homogeneously, it is preferred to use different sizes of fillers, the smallest (finest) being interspersed between the coarsest, according to the principle of particle size compaction.

### Inhibitors

Inhibitors, and in particular free radical inhibitors, are known to those skilled in the art. A preferred radical inhibitor is hydroquinone. Other suitable free radical inhibitors include, without being limited thereto, trimethylhydroquinone, hydroquinone monomethyl ether, tert-butylcatechol and naphthaquinone. It is also envisioned that more than one free radical inhibitor might be used in the anchoring composition.

Preferably, the polymerization inhibitor is methylhydroquinone. Of course, other inhibitors may be used alone or in combination with hydroquinone, for instance para-benzoquinone, catechol and similar, which are conventionally used as polymerization inhibitors. The inhibitor is contained in the acrylate diluents as sacrificial component in order to prevent double bonds from opening up, for example in the case of UV exposure. It is used at an amount from 350 to 500 ppm for the pentaacrylate and less than 100 ppm for the triacrylate, based on the total weight of the acrylate and the inhibitor.

### Other additives

A pigment may be used to color the anchoring composition. Suitable pigments are known to those skilled in the art. Mention may for example be made in this regard of carbon black or titanium dioxide.

The two-component adhesive composition according to the invention is obtained by reaction between the component **A** and the component **B.** It may be prepared by mixing the component **A** as described in the context of the present invention and the component **B** as described in the context of the present invention. When the first composition and the second composition are brought into contact, polymerization takes place, more particularly a complex sequence of reactions involving, in order, acrylate/primary amine functionalities, followed by epoxide and primary amine functionalities, then epoxides and secondary amines. Subsequently, the homopolymerization of the epoxy may take place in particular in the presence of tertiary amine accelerator and energy source (such as temperature). The reaction of any residual acrylate entities with secondary amines will be very slow or even non-existent.

The weight ratio of the component A to the component B may be between 1.5:1 and 1.8:1, preferably 1.7:1.

The invention also relates to the use of a two-component composition according to the invention as adhesive, especially for anchoring threaded rods or studs intended to support heavy loads in different types of support materials and also for taking up concrete reinforcing bars intended to reinforce concrete works and structures.

Another subject of the invention is an adhesive kit, comprising a two-component composition according to the invention, contained within a two-compartment cartridge, which can be used with a static mixer (by means of which the components A and B are transported and brought into contact), and an applicator making it possible to extrude the components A and B from their respective compartments. The applicator may be manual, electric or pneumatic.

Other advantages and features of the present invention will become apparent on reading the examples below, given by way of nonlimiting illustration.

### EXAMPLES

### Preparation protocol

The components **A** and **B** are prepared in 2 different mixers in order to avoid any contact between the compounds or even their vapors, where appropriate. Once prepared, the components **A** and **B** are mixed by virtue of high-speed dispersers.

Component **A:** The suitable amounts of liquid ingredients are first poured in, preferably from the least viscous to the most viscous. Additives are added and homogenized with the other liquid ingredients. Subsequently, the thixotropic agent is incorporated in several steps due to its high volatility and low density, very quickly occupying by itself the whole volume of the mixing vessel. The dispersion step follows, under high shearing up to 1100 revolutions per minute (rpm), under strong vacuum at 0.1 bar. At the end, fillers are added and dispersed at speeds extending up to 1100 rpm, under strong vacuum at 0.1 bar, enabling the evacuation of any air trapped during the prior steps.

Component **B:** The suitable amounts of liquid ingredients are first poured in, preferably from the least viscous ingredient to the most viscous . Additives are added and homogenized with the other liquid ingredients. Subsequently, the thixotropic agent is incorporated in several steps due to its high volatility and low density, very quickly occupying by itself the whole volume of the mixing vessel. The dispersion step follows, under high shearing up to 1100 rpm, under strong vacuum at 0.1 bar. At the end, fillers are added and dispersed at speeds extending up to 1100 rpm, under strong vacuum at 0.1 bar, enabling the evacuation of any air trapped during the prior steps.

### Equipment and evaluation methods

### Fluidity:

It is possible to evaluate the fluidity of the product by measuring the flow rate, that is to say the amount of product extruded in grams per minute (g/min), as long as the same system is used (cartridge, piston, static mixer and pneumatic pistol) under the same operating conditions; the flow rate is measured at a given temperature, 5°C, using a pneumatic P450 ml side by side pistol, reference SPIT 051828. The extrusion speed is given by the air pressure of 5 bar.

The ultimate tensile breaking strength of an anchoring with the adhesive composition: A concrete block of class C20/25 or C50/60 of approximately 250 cm * 150 cm * 28 cm is used to evaluate the performance of five repeats. Holes approximately 84 mm in depth and 14 mm in diameter are pierced on the upper face of the 250cm * 150cm concrete block. Subsequently, the holes are cleaned with a brush and compressed air to remove loose particles and dust therefrom. The adhesive composition is subsequently injected into the drilled hole and a 12 mm stainless steel rod is inserted into the hole semi-filled with adhesive using a rotational motion. The minimum waiting time before performing the test of extraction by pulling is 3 hours to 24 hours depending on the curing conditions. The extraction is carried out with a plunger cylinder, model RCH302 700 bar ENERPAC or equivalent, at a speed which may vary from 1mm/min to 5mm/min, to record the level of load applied, and a position sensor, model TEMPOSONICS MTS or equivalent, to record the movement of the anchoring. The tests are performed in the confined configuration in order to obtain localized rupture at the adhesive rather than the support, in particular to avoid concrete cone which is not representative of the strength of the anchoring. The movement of the anchoring and the load applied are recorded until rupture, in mm and kN respectively.

Under the extreme test conditions, in which evaluation of the tearing performance of the composition is required, for example, at high temperature (80°C) or low temperature (5°C), the concrete blocks may be of small dimensions, such as cubes of 15cm * 15cm * 20cm, so as to be stored in a SECASI or equivalent climate chamber (according to the procedure described in the guide EAD-330499-00-0601, §2.2.2.10 Minimum installation temperature (test series B4)), before performing the tensile test. A special device composed of a casing clamp is used to hold the cube-shaped substrate during the tearing. The tearing performance may also be evaluated in a cracked substrate in static or dynamic mode, reproducing a seismic environment. In this case, a SPIT test bench for tensile testing on cracked concrete is used; it is composed of an SPX POWER TEAM RH 203 model D plunger cylinder or equivalent, operating at a speed of 1mm/min to 5mm/min, and a TEMPOSONICS MTS position sensor, 0 to 100 mm range or a SENSOREX position sensor, 0 to 10 mm range, or equivalent. The principle is to pierce the hole in a crack, then to open the through-crack by a width of the order of 0.3 mm or 0.8 mm, or else to apply a cycle of opening/closing of said crack with an opening width of 0.1 to 0.3 mm, under loading.

### Composition examples

### Example 1 (comparative)

A two-component epoxy-based adhesive composition that is commercially available and sold under the trade name EPCON C8 XTREM by SPIT, ITW Construction Europe, is prepared according to the protocol described above. The compositions of the components **A** and **B** are specified below.

### Component A

| Compounds | | % by weight in **A** | % by weight in **A+B** |
|---|---|---|---|
| Epoxide resin | DER 352 | 55-65 | 35-41 |
| Diluent for epoxide | Epodil 750 | 3-6 | 2-4 |
| Triacrylate | SR351 | 3-6 | 2-4 |
| Pentaacrylate | SR-399 | 15-20 | 10-13 |
| Additive | BYK 1794 | 0.1-0.5 | 0.1-0.3 |
| Pigment | N77 | 0.005-0.010 | 0.003-0.006 |
| Thixotropic agent | Cabosil TS 720 | 3.8-4.2 | 2.4-2.7 |
| Fillers | BE01 | 5-15 | 3-10 |

### Component B:

| Compounds | | % by weight in **B** | % by weight in **A+B** |
|---|---|---|---|
| Hardener | ANCAMINE 2422 | 45-50 | 16-18 |
| Accelerator | ANCAMINE K54 | 8-15 | 3-5 |
| Thixotropic agent | Cabosil TS 720 | 3.0-3.5 | 1.1-1.3 |
| Filler | BE01 | 35-40 | 13-15 |

The following results were observed.

### Fluidity

| | | |
|---|---|---|
| Measurement of flow rate at 5°C | (g/min) | 118 |

### Adhesion stress in class C20/25 concrete:

| | | |
|---|---|---|
| Traction 20°C, 24 h | (N/mm²) | 30.0 |
| Traction 20°C, 6.5 h | (N/mm²) | 16.0 |
| Traction 80°C, 24 h | (N/mm²) | 17.4 |
| Traction 5°C, 24 h | (N/mm²) | 21.5 |
| Traction 20°C, in 0.5 mm-wide cracked concrete, 24h | (N/mm²) | 12.6 |

This adhesive composition has slow reaction kinetics due to the use of a modified or adducted cycloaliphatic diamine, leading to a low adhesion stress at 6.5 hours of curing at 20°C (conversion of 53%), and 24 hours of curing at 5°C.

### Example 2 (comparative)

A two-part adhesive composition having a volume ratio of component A: component B of 2:1 is prepared according to the preparation protocol described above. The containers are rigid cartridges composed of two compartments. The compartments may be in a side-by-side or coaxial configuration. The first compartment contains the component **A** while the second contains the component **B.** The composition of the components **A** and **B** is specified below:

**Component A**

| Compounds | | % by weight in **A** | % by weight in **A+B** |
|---|---|---|---|
| Epoxide resin | DER 352 | 70-78 | 44-49 |
| Diluent for epoxide | Epodil 750 | 7-9 | 4-6 |
| Pentaacrylate | SR-399 | 3-10 | 2-6 |
| Additive | BYK 1794 | 0.1-0.5 | 0.1-0.3 |
| Pigment | N77 | 0.005-0.020 | 0.003-0.012 |
| Thixotropic agent | Cabosil TS 720 | 3.8-4.2 | 2.4-2.6 |
| Fillers | BE01 | 5-12 | 3-7 |

**Component B:**

| Compounds | | % by weight in **B** | % by weight in **A+B** |
|---|---|---|---|
| Hardener | NBDA | 20-30 | 8-11 |
| Accelerator | Mixture of compounds (trade secret) | 18-26 | 7-10 |
| Thixotropic agent | Cabosil TS 720 | 3.0-3.5 | 1.1-1.3 |
| Filler | BE01 | 45-55 | 17-21 |

The following results were observed.

### Fluidity

| | | |
|---|---|---|
| Measurement of flow rate at 5°C | (g/min) | 256 |

### Adhesion stress in class C20/25 concrete:

| | | |
|---|---|---|
| Traction 20°C, 24 h | (N/mm²) | 33.5 |
| Traction 20°C, 7h | (N/mm²) | 28.8 |
| Traction 80°C, 24 h | (N/mm²) | 19.2 |
| Traction 5°C, 24 h | (N/mm²) | 14.7 |
| Traction 20°C, in 0.5 mm-wide cracked concrete, 24h | (N/mm²) | 13.8 |

The use of an unmodified or non-adducted cycloaliphatic amine as hardener improves the performance at 7 hours by boosting the reaction. However, the adhesion stress obtained at 5°C is low due to the high dependency of the epoxy-amine reaction on temperature, slowing the reaction at low temperature, in particular 5°C. The small amount of acrylate present is insufficient to compensate for this latency.

### Example 3 (comparative)

A two-part adhesive composition having a volume ratio of component A: component B of 2:1 is prepared according to the preparation protocol described above. The containers are rigid cartridges composed of two compartments. The compartments may be in a side-by-side or coaxial configuration. The first compartment contains the component **A** while the second contains the component **B.** The composition of the components **A** and **B** is specified below:

**Component A**

| Compounds | | % by weight in **A** | % by weight in **A+B** |
|---|---|---|---|
| Epoxide resin | DER 352 | 70-78 | 43-48 |
| Diluent for epoxide | Epodil 750 | 7-9 | 4-6 |
| Pentaacrylate | SR-399 | 3-10 | 2-6 |
| Additive | BYK 1794 | 0.1-0.5 | 0.1-0.3 |
| Pigment | N77 | 0.005-0.020 | 0.003-0.012 |
| Thixotropic agent | Cabosil TS 720 | 3.8-4.2 | 2.3-2.6 |
| Fillers | BE01 | 5-12 | 3-7 |

**Component B:**

| Compounds | | % by weight in **B** | % by weight in **A+B** |
|---|---|---|---|
| Hardener | m-XDA | 20-30 | 8-11 |
| Accelerator | Mixture of compounds (trade secret) | 18-26 | 7-10 |
| Thixotropic agent | Cabosil TS 720 | 3.0-3.5 | 1.1-1.3 |
| Filler | BE01 | 45-55 | 17-21 |

The following results were observed.

### Fluidity

| | | |
|---|---|---|
| Measurement of flow rate at 5°C | (g/min) | 256 |

### Adhesion stress in class C20/25 concrete:

| | | |
|---|---|---|
| Traction 20°C, 24 h | (N/mm²) | 33.5 |
| Traction 20°C, 7h | (N/mm²) | 28.4 |
| Traction 80°C, 24 h | (N/mm²) | 8.1 |

The use of m-XDA, an unmodified or non-adducted cycloaliphatic amine, improves the reaction with a significantly improved performance at 7 h compared to example 1. However, the unmodified m-XDA does not make it possible to achieve the required performance at 80°C.

### Example 4 (according to the invention)

A two-part adhesive composition having a volume ratio of component A: component B of 2:1 is prepared according to the preparation protocol described above. The containers are rigid cartridges composed of two compartments. The compartments may be in a side-by-side or coaxial configuration. The first compartment contains the component **A** while the second contains the component **B.** The composition of the components **A** and **B** is specified below:

### Component A

| Compounds | | % by weight in **A** | % by weight in **A+B** |
|---|---|---|---|
| Epoxide resin | DER 352 | 52-58 | 33-37 |
| Diluent for epoxide | Epodil 750 | 2-6 | 1-4 |
| Triacrylate | SR351 | 2-8 | 1-5 |
| Pentaacrylate | SR-399 | 2-8 | 1-5 |
| Additive | BYK 1794 | 0.1-0.5 | 0.06-0.32 |
| Pigment | N77 | 0.005-0.020 | 0.003-0.013 |
| Thixotropic agent | Cabosil TS 720 | 2.5-3.0 | 1.6-1.9 |
| Fillers | BE01 | 25-30 | 16-19 |

### Component B:

| Compounds | | % by weight in **B** | % by weight in **A+B** |
|---|---|---|---|
| Hardener | NBDA | 20-25 | 7-9 |
| Accelerator | Mixture of compounds (trade secret) | 18-23 | 7-8 |
| Thixotropic agent | Cabosil TS 720 | 3.0-4.5 | 1.1-1.6 |
| Filler | BE01 | 50-56 | 18-21 |

The following results were observed.

### Fluidity

| | | |
|---|---|---|
| Measurement of flow rate at 5°C | (g/min) | 196 |

### Adhesion stress in class C20/25 concrete:

| | | |
|---|---|---|
| Traction 20°C, 24 h | (N/mm²) | 29.9 |
| Traction 20°C, 7 h | (N/mm²) | 26.6 |
| Traction 80°C, 24 h | (N/mm²) | 19.0 |
| Traction 5°C, 24 h | (N/mm²) | 25.2 |
| Traction 20°C, in 0.5 mm-wide cracked concrete, 24h | (N/mm²) | 13.7 |

The composition of example 4 shows a good compromise of performance at 20°C, 7h, 5°C, 24h and 80°C, due to the combination of the polyacrylates and the epoxide resins in the component **A** and the presence of unmodified or non-adducted norbornane diamine in the component **B.**

## Claims

1. Two-component adhesive composition, comprising:
a component **A** comprising
- from 50 to 60% by weight of the part A, preferably 52 to 58% of at least one curable epoxide resin,
- from 1 to 10% by weight of the part A, preferably from 2 to 6% of at least one diluent for the epoxide resin having a viscosity of the order of 10 to 200 mPa.s, at 25°C according to ISO 3219, selected from the diglycidyl ethers,
- from 2 to 20% by weight of the part A, preferably from 4 to 16% of trimethylolpropane triacrylate (TMPTA) and at least one compound of acrylate type, having a functionality of between 1 and 6, preferably 2 and 5, limit values included; and
a component **B** comprising
- from 18 to 28% by weight of the part B, preferably from 20 to 25% of at least one curing agent for the epoxide resin, selected from unmodified or non-adduct amines,
- from 15 to 25% by weight of the part B, preferably from 18 to 23% of at least one accelerator (or activating agent) for the epoxide resin, selected from tertiary amines, modified (or substituted) phenolic compounds, sulfonic acids and esters thereof, salicylic acids, linear aliphatic amines that are not adducts with an epoxide compound, compounds containing the imidazole functionality, compounds containing the toluidine functionality.

2. Composition according to Claim 1, **characterized in that** the weight ratio of the component **A** to the component **B** is between 1.5:1 and 1.8:1, preferably 1.7:1.

3. Composition according to Claim 1 or 2, **characterized in that** the epoxide resin is selected from novolac epoxide resins, bisphenol F diglycidyl ether, octadecylene oxide, glycidyl methacrylate, glycidyl acryate, bisphenol A diglycidyl ether, vinylcyclohexene dioxide, 3,4-epoxycyclohexylmethyl-3,4-epoxycyclohexane carboxylate, 3,4-epoxy-6-methylcyclohexylmethyl-3,4-epoxy-6-methylcyclohexene carboxylate, bis(3,4-epoxy-6-methylcyclohexylmethyl) adipate, bis(2,3-epoxycyclopentyl) ether, aliphatic epoxide modified with polypropylene glycol, dipentene dioxide, epoxidized polybutadiene, a silicone resin containing an epoxy functionality, flame-retardant epoxide resins, an epoxy resin of bromobisphenol type, 1,4-butanediol diglycidyl ether of phenol formaldehyde novolac, and resorcinol diglycidyl ether and mixtures of at least two thereof.

4. Composition according to any one of Claims 1 to 3, **characterized in that** the diluent is selected from hexanediol diglycidyl ether, 1,4-butanediol diglycidyl ether, 1,4-cyclohexanedimethanol diglycidyl ether, resorcinol diglycidyl ether, cyclohexanedimethanol diglycidyl ether, neopentyl glycol diglycidyl ether, dodecyl glycidyl ether or tetradecyl glycidyl ether, trimethylolpropane triglycidyl ether, glycerol-3-polyglycidyl ether, trimethylolpropane polyglycidyl ether and pentaerythritol polyglycidyl ether.

5. Composition according to any one of Claims 1 to 4, **characterized in that** the compound of acrylate type is selected from tricyclodecanedimethanol diacrylate, dipentaerythritol pentaacrylate and triisocyanurate triacrylate, tricyclodecanedimethanol dimethacrylate, 1,6-hexanediol diacrylate, dipropylene glycol diacrylate, ethoxylated bisphenol A diacrylate, polyethylene glycol diacrylate, propoxylated neopentyl glycol diacrylate, tetraethylene glycol diacrylate, triethylene glycol diacrylate, tripropylene glycol diacrylate, 1,3-butylene glycol dimethacrylate, 1,4-butanediol dimethacrylate, 1,6-hexanediol dimethacrylate, ethoxylated bisphenol A dimethacrylate, polyethylene glycol dimethacrylate, tetraethylene glycol dimethacrylate, triethylene glycol dimethacrylate, ethylene glycol dimethacrylate and diethylene glycol dimethacrylate, ethoxylated or propoxylated trimethylolpropane triacrylate, ethoxylated pentaerythritol triacrylate, propoxylated glyceryl triacrylate, trimethylolpropane trimethacrylate, or a mixture of at least two thereof.

6. Composition according to any one of Claims 1 to 5, **characterized in that** the component A comprises a mixture of trimethylolpropane triacrylate and dipentaerythritol pentaacrylate.

7. Composition according to any one of Claims 1 to 6, **characterized in that** the curing agent for the epoxide resin is an aliphatic or cycloaliphatic unmodified amine or amine that is not an adduct, selected from 1,3-benzenedimethanamine, norbornane diamine (NBDA), diethylenetriamine (DETA), triethylenetetramine (TETA), 1,3-cyclohexanebis(methylamine), bis(4-aminophenyl)methane, benzylamine, propane-1,3-diamine, 2,2-dimethyl-1,3-propanediamine (neopentanediamine), hexamethylenediamine, bis(3-aminopropyl)amine, N,N-bis(3-aminopropyl)methylamine, tetraethylenepentamine, pentaethylenehexamine, 2,2,4-trimethylhexane-1,6-diamine, m-xylylenediamine, 1,2- and 1,4-diaminocyclohexane, bis(4-aminocyclohexyl)methane, bis(4-amino-3-methylcyclohexyl)methane, 2,2-bis(4-aminocyclohexyl)propane, 3-aminomethyl-3,5,5-trimethylcyclohexylamine (isophorone diamine) or a mixture of at least two thereof.

8. Composition according to any one of Claims 1 to 7, **characterized in that** the curing agent for the epoxide resin is an unmodified amine or amine that is not an adduct containing at least norbornane diamine.

9. Composition according to any one of Claims 1 to 8, **characterized in that** the accelerator (or activating agent) for the epoxide resin is selected from styrenated phenol, resorcinol, salicylic acid, acetylsalicylic acid, 2-piperazin-1-ethylamine, para-toluenesulfonic acid and esters thereof such as methyl-4-toluenesulfonate, bis(dimethylaminoethyl)piperazine, N,N'-dimethylpiperazine, dimethylaminomethylphenol, 2,4,6-tris(dimethylaminomethyl)phenol, 2,4,6-tris((3-(dimethylamino)propyl)aminomethyl)phenol, 1-methylimidazole, 1-ethylimidazole, 1-vinylimidazole, 2-methylimidazole, 2-ethylimidazole, 2-isopropylimidazole, heptadecylimidazole, 2-ethyl-4-methylimidazole, 1-benzyl-2-methylimidazole, N,N-dimethylaniline, N,N-dimethyl-o-, -m-, -p-toluidine, N,N-diethylaniline, N,N-diethyl-o- -m-, -p-toluidine, N,N-di(2-hydroxyethyl)-p-toluidine, N,N-bis(2-hydroxyethyl)-p-toluidine, N,N-bis(2-hydroxypropyl)-p-toluidine or a mixture of at least two thereof.

10. Composition according to any one of Claims 1 to 9, **characterized in that** the component B comprises an accelerator (or activating agent) or a mixture of at least two accelerators for the epoxide resin, selected from
- tertiary amines, in particular, 2-piperazin-1-ethylamine, 2,4,6-tris(dimethylaminomethyl)phenol,
- modified (or substituted) phenolic compounds, in particular, styrenated phenol or resorcinol,
- sulfonic acids and esters thereof, in particular, para-toluenesulfonic acid and methyl-4-toluenesulfonate,
- salicylic acid,
- linear aliphatic amines that are not adducts with an epoxide compound, in particular, diethylenetriamine and triethylenetetraamine.

11. Composition according to any one of Claims 1 to 10, **characterized in that** it further comprises one or more thixotropic agents, one or more fillers, one or more free radical inhibitors, one or more pigments.

12. Use of a two-component composition according to any one of Claims 1 to 11 as adhesive, in particular, for anchoring threaded rods or studs intended to support heavy loads in different types of support materials on the one hand, and for concrete reinforcers intended to reinforce structures and items made of concrete, on the other hand.

13. Adhesive kit, comprising a composition according to any one of Claims 1 to 11, contained within a two-compartment cartridge, which can be used by means of a static mixer (by means of which the components A and B are transported and brought into contact), and an applicator making it possible to extrude the components A and B from their respective compartment.

## Patentansprüche

1. Zweikomponenten-Klebstoffzusammensetzung, aufweisend:
eine Komponente **A,** aufweisend:
- 50 bis 60 Gew.-% des Teils A, vorzugsweise 52 bis 58 % zumindest eines härtbaren Epoxidharzes,
- 1 bis 10 Gew.-% des Teils A, vorzugsweise 2 bis 6 % zumindest eines Verdünnungsmittels für das Epoxidharz mit einer Viskosität in der Höhe von 10 bis 200 mPa.s,
bei 25 °C gemäß ISO 3219, ausgewählt aus den Diglycidylethern,
- 2 bis 20 Gew.-% des Teils A, vorzugsweise 4 bis 16 % Trimethylolpropantriacrylat (TMPTA) und zumindest eine Acrylatverbindung mit einer Funktionalität zwischen 1 und 6, vorzugsweise 2 und 5, einschließlich der Grenzwerte; und
eine Komponente **B,** aufweisend:
- 18 bis 28 Gewichts-% des Teils B, vorzugsweise 20 bis 25 % zumindest eines Härtungsmittels für das Epoxidharz, ausgewählt aus nicht modifizierten Aminen oder solchen, die keine Addukte sind,
- 15 bis 25 Gewichts-% des Teils B, vorzugsweise 18 bis 23 % zumindest eines Beschleunigers (oder Aktivierungsmittels) für das Epoxidharz, ausgewählt aus tertiären Aminen, modifizierten (oder substituierten) Phenolverbindungen, Sulfonsäuren und deren Estern, Salicylsäuren, linearen aliphatischen Aminen, die keine Addukte mit einer epoxidhaltigen Verbindung sind, Verbindungen, die die Imidazol-Funktionalität aufweisen, Verbindungen, die die Toluidin-Funktionalität aufweisen.

2. Zusammensetzung nach Anspruch 1, **dadurch gekennzeichnet, dass** das Gewichtsverhältnis der Komponente **A** zur Komponente **B bei** zwischen 1,5:1 und 1,8:1, vorzugsweise bei 1,7:1 liegt.

3. Zusammensetzung nach Anspruch 1 oder 2, **dadurch gekennzeichnet, dass** das Epoxidharz ausgewählt ist aus Novolak-Epoxidharzen, Bisphenol-F-Diglycidylether, Octadecylenoxid, Glycidylmethacrylat, Glycidylacrylat, Bisphenol-A-diglycidylether, Vinylcyclohexen-dioxid, 3,4-Epoxycyclohexylmethyl-3,4-epoxycyclohexan-carboxylat, 3,4-Epoxy-6-methylcyclohexylmethyl-3,4-epoxy-6-methylcyclohexencarboxylat, Bis(3,4-epoxy-6-methylcyclohexylmethyl)adipat, Bis(2,3-epoxycyclopentyl)ether, mit Polypropylenglykol modifiziertem aliphatischem Epoxid, Dipentendioxid, epoxidiertem Polybutadien, einem Silikonharz, das eine Epoxidfunktionalität aufweist, flammhemmenden Epoxidharzen, einem Epoxidharz vom Typ Brombisphenol, 1,4-Butandioldiglycidylether von Phenol-Formaldehyd-Novolak und Resorcinoldiglycidylether und Mischungen von zumindest zwei davon.

4. Zusammensetzung nach einem der Ansprüche 1 bis 3, **dadurch gekennzeichnet, dass** das Verdünnungsmittel ausgewählt ist aus Hexandioldiglycidylether, 1,4-Butandioldiglycidylether, 1,4-Cyclohexandimethanoldiglycidylether, Resorcinoldiglycidylether, Cyclohexandimethanoldiglycidylether, Neopentylglykoldiglycidylether, Dodecylglycidylether oder Tetradecylglycidylether, Trimethylolpropantriglycidylether, Glycerin-3-polyglycidylether, Trimethylolpropanpolyglycidylether und Pentaerythritolpolyglycidylether.

5. Zusammensetzung nach einem der Ansprüche 1 bis 4, **dadurch gekennzeichnet, dass** die Acrylatverbindung ausgewählt ist aus Tricyclodecandiethanoldiacrylat, Dipentaerythritpentaacrylat und Triisocyanurattriacrylat, Tricyclodecandiethanoldimethacrylat, 1,6-Hexandioldiacrylat, Dipropylenglykoldiacrylat, ethoxyliertem Bisphenol-A-diacrylat, Polyethylenglykoldiacrylat, propoxyliertem Neopentylglykoldiacrylat, Tetraethylenglykoldiacrylat, Triethylenglykoldiacrylat, Tripropylenglykoldiacrylat, 1,3-Butylenglykoldimethacrylat, 1,4-Butandioldimethacrylat, 1,6-Hexandioldimethacrylat, ethoxyliertem Bisphenol-A-dimethacrylat, Polyethylenglykoldimethacrylat, Tetraethylenglykoldimethacrylat, Triethylenglykoldimethacrylat, Ethylenglykol-dimethacrylat und Diethylenglykol-dimethacrylat, ethoxyliertem oder propoxyliertem Trimethylolpropantriacrylat, ethoxyliertem Pentaerythrittriacrylat, propoxyliertem Glyceryltriacrylat, Trimethylolpropantrimethacrylat oder einem Gemisch aus zumindest zwei davon.

6. Zusammensetzung nach einem der Ansprüche 1 bis 5, **dadurch gekennzeichnet, dass** die Komponente A ein Gemisch aus Trimethylolpropantriacrylat und Dipentaerythritpentaacrylat aufweist.

7. Zusammensetzung nach einem der Ansprüche 1 bis 6, **dadurch gekennzeichnet, dass** das Härtungsmittel für das Epoxidharz ein aliphatisches oder cycloaliphatisches nicht modifiziertes Amin oder Amin ist, das kein Addukt ist, ausgewählt aus 1,3-Benzoldimethanamin, Norbornandiamin (NBDA), Diethylentriamin (DETA), Triethylentetramin (TETA), 1,3-Cyclohexanbis(methylamin), Bis(4-aminophenyl)-methan, Benzylamin, Propan-1,3-diamin, 2,2-Dimethyl-1,3-propandiamin (Neopentandiamin), Hexamethylendiamin, Bis(3-aminopropyl)amin, N,N-Bis(3-aminopropyl)methylamin, Tetraethylenpentamin, Pentaethylenhexamin, 2,2,4-Trimethylhexan-1,6-Diamin, m-Xylylendiamin, 1,2- und 1,4-Diaminocyclohexan, Bis(4-aminocyclohexyl)methan, Bis(4-amino-3-methylcyclohexyl)methan, 2,2-Bis(4-aminocyclohexyl)propan, 3-Aminomethyl-3,5,5-Trimethylcyclohexylamin (Isophorondiamin) oder einem Gemisch aus zumindest zwei davon.

8. Zusammensetzung nach einem der Ansprüche 1 bis 7, **dadurch gekennzeichnet, dass** das Härtungsmittel für das Epoxidharz ein nicht modifiziertes Amin oder Amin ist, das kein Addukt ist, das zumindest Norbornandiamin enthält.

9. Zusammensetzung nach einem der Ansprüche 1 bis 8, **dadurch gekennzeichnet, dass** der Beschleuniger (oder das Aktivierungsmittel) für das Epoxidharz ausgewählt ist aus styrolisiertem Phenol, Resorcin, Salicylsäure, Acetylsalicylsäure, 2-Piperazin-1-ethylamin, para-Toluolsulfonsäure und deren Estern wie Methyl-4-toluolsulfonat, Bis(dimethylaminoethyl)piperazin, N,N'-Dimethylpiperazin, Dimethylaminomethylphenol, 2,4,6-Tris(dimethylaminomethyl)phenol, 2,4,6-Tris((3-(dimethylamino)propyl)aminomethyl)phenol, 1-Methylimidazol, 1-Ethylimidazol, 1-Vinylimidazol, 2-Methylimidazol, 2-Ethylimidazol, 2-Isopropylimidazol, Heptadecylimidazol, 2-Ethyl-4-methylimidazol, 1-Benzyl-2-methylimidazol, N,N-Dimethylanilin, N,N-Dimethyl-o-, -m-, -p-toluidin, N,N-Diethylanilin, N,N-Diethyl-o- -m-, -p-toluidin, N,N-Di(2-hydroxyethyl)-p-toluidin, N,N-Bis(2-hydroxyethyl)-p-toluidin, N,N-Bis(2-hydroxypropyl)-p-toluidin oder einem Gemisch von zumindest zwei davon.

10. Zusammensetzung nach einem der Ansprüche 1 bis 9, **dadurch gekennzeichnet, dass** die Komponente B einen Beschleuniger (oder ein Aktivierungsmittel) oder ein Gemisch aus zumindest zwei Beschleunigern für das Epoxidharz aufweist, ausgewählt aus
- tertiären Aminen, insbesondere 2-Piperazin-1-ethylamin, 2,4,6-Tris(dimethylaminomethyl)phenol,
- modifizierten (oder substituierten) Phenolverbindungen, insbesondere styrolisiertem Phenol oder Resorcin,
- Sulfonsäuren und deren Ester, insbesondere para-Toluolsulfonsäure und Methyl-4-toluolsulfonat,
- Salicylsäure,
- linearen aliphatischen Aminen, die keine Addukte mit einer Epoxidverbindung sind, insbesondere Diethylentriamin und Triethylentetraamin.

11. Zusammensetzung nach einem der Ansprüche 1 bis 10, **dadurch gekennzeichnet, dass** sie ferner ein oder mehrere Thixotropiermittel, einen oder mehrere Füllstoffe, einen oder mehrere Inhibitoren für freie Radikale, ein oder mehrere Pigmente aufweist.

12. Verwendung einer Zweikomponenten-Zusammensetzung nach einem der Ansprüche 1 bis 11 als Klebstoff, insbesondere zur Verankerung von Gewindestangen oder -bolzen, die einerseits dazu bestimmt sind, schwere Lasten in verschiedenen Arten von Trägermaterialien zu tragen, und andererseits für Betonbewehrungen, die dazu bestimmt sind, Strukturen und Objekte aus Beton zu verstärken.

13. Klebstoffkit, eine Zusammensetzung nach einem der Ansprüche 1 bis 11 aufweisend, die in einer Kartusche mit zwei Kammern enthalten ist, die mittels eines statischen Mischers (mit dem die Komponenten A und B transportiert und in Kontakt gebracht werden) verwendet werden kann, und einen Applikator, der es ermöglicht, die Komponenten A und B aus ihrer jeweiligen Kammer zu extrudieren.

## Revendications

1. Composition adhésive à deux composants, comprenant :
un composant **A** comprenant
- 50 à 60 % en poids de la partie A, de préférence 52 à 58 % de l'au moins une résine époxyde durcissable,
- 1 à 10 % en poids de la partie A, de préférence 2 à 6 % d'au moins un diluant pour la résine époxyde ayant une viscosité de l'ordre de 10 à 200 mPa.s,
à 25 °C selon la norme ISO 3219, choisi parmi les éthers diglycidyliques,
- 2 à 20 % en poids de la partie A, de préférence 4 à 16 % de triacrylate de triméthylolpropane (TMPTA) et de l'au moins un composé de type acrylate, ayant une fonctionnalité comprise entre 1 et 6, de préférence 2 et 5, valeurs limites incluses ; et
un composant **B** comprenant
- 18 à 28 % en poids de la partie B, de préférence 20 à 25 % de l'au moins un agent de durcissement pour la résine époxyde, choisi parmi les amines non modifiées ou non adduites,
- 15 à 25 % en poids de la partie B, de préférence 18 à 23 % d'au moins un accélérateur (ou agent d'activation) de la résine époxyde, choisi parmi les amines tertiaires, les composés phénoliques modifiés (ou substitués), les acides sulfoniques et leurs esters, les acides salicyliques, les amines aliphatiques linéaires qui ne sont pas des adduits avec un composé époxyde, les composés contenant la fonctionnalité imidazole, les composés contenant la fonctionnalité toluidine.

2. Composition selon la revendication 1, **caractérisée en ce que** le rapport en poids entre le composant **A** et le composant **B** est compris entre 1.5:1 et 1.8:1, de préférence de 1.7:1.

3. Composition selon la revendication 1 ou 2, **caractérisée en ce que** la résine époxyde est choisie parmi les résines époxydes novolaques, l'éther diglycidylique de bisphénol F, l'oxyde d'octadécylène, le méthacrylate de glycidyle, l'acryate de glycidyle, l'éther diglycidylique de bisphénol A, le dioxyde de vinylcyclohexène, le carboxylate de 3,4-époxycyclohexylméthyl-3,4-époxycyclohexane, le carboxylate de 3,4-époxy-6-méthylcyclohexylméthyl-3,4-époxy-6-méthylcyclohexène, l'adipate de bis(3,4-époxy-6-méthylcyclohexylméthyle), l'éther bis(2,3-époxycyclopentylique), l'époxyde aliphatique modifié avec polypropylène glycol, le dioxyde de dipentène, le polybutadiène époxydé, une résine de silicone contenant une fonctionnalité époxy, des résines époxydes ignifuges, une résine époxy de type bromobisphénol, l'éther diglycidylique de 1,4-butanediol de phénol formaldéhyde novolaque, et l'éther diglycidylique de résorcinol et des mélanges d'au moins deux de ceux-ci.

4. Composition selon l'une quelconque des revendications 1 à 3, **caractérisée en ce que** le diluant est choisi parmi l'éther diglycidylique d'hexanediol, l'éther diglycidylique de 1,4-butanediol, l'éther diglycidylique de 1,4-cyclohexanediméthanol, l'éther diglycidylique de résorcinol, l'éther diglycidylique de cyclohexanediméthanol, l'éther diglycidylique de néopentyl glycol, l'éther dodécyl glycidylique ou l'éther tétradécyl glycidylique, l'éther triglycidylique de triméthylolpropane, le polyéther glycidylique de glycérol-3, le polyéther glycidylique de triméthylolpropane et le polyéther glycidylique de pentaérythritol.

5. Composition selon l'une quelconque des revendications 1 à 4, **caractérisée en ce que** le composé de type acrylate est choisi parmi le diacrylate de tricyclodécanediméthanol, le pentaacrylate de et le triacrylate triisocyanurate de dipentaérythritol, le diméthacrylate de tricyclodécanediméthanol, le diacrylate de 1,6-hexanediol, le diacrylate de dipropylène glycol, le diacrylate de bisphénol A éthoxylé, le diacrylate de polyéthylène glycol, le diacrylate de néopentyl glycol propoxylé, le diacrylate de tétraéthylène glycol, le diacrylate de triéthylène glycol, le diacrylate de tripropylène glycol, le diméthacrylate de 1,3-butylène glycol, le diméthacrylate de 1,4-butanediol, le diméthacrylate de 1,6-hexanediol, le diméthacrylate de bisphénol A éthoxylé, le diméthacrylate de polyéthylène glycol, le diméthacrylate de tétraéthylène glycol, le diméthacrylate de triéthylène glycol, le diméthacrylate d'éthylène glycol et diméthacrylate de diéthylène glycol, le triacrylate de triméthylolpropane éthoxylé ou propoxylé, le triacrylate de pentaérythritol éthoxylé, le triacrylate de glycéryle propoxylé, triméthacrylate de triméthylolpropane, ou un mélange d'au moins deux de ceux-ci.

6. Composition selon l'une quelconque des revendications 1 à 5, **caractérisée en ce que** le composant A comprend un mélange de triacrylate de triméthylolpropane et de pentaacrylate de dipentaérythritol.

7. Composition selon l'une quelconque des revendications 1 à 6, **caractérisée en ce que** l'agent de durcissement pour la résine époxyde est une amine non modifiée aliphatique ou cycloaliphatique ou une amine qui n'est pas un adduit, choisie parmi la 1,3-benzènediméthanamine, la norbornane diamine (NBDA), la diéthylènetriamine (DETA), la triéthylènetétramine (TETA), la 1,3-cyclohexanebis(méthylamine), le bis(4-aminophényl)méthane, la benzylamine, la propane-1,3-diamine, la 2,2-diméthyl-1,3-propanediamine (néopentanediamine), la hexaméthylènediamine, la bis(3-aminopropyl)amine, la N,N-bis(3-aminopropyl)méthylamine, la tétraéthylènepentamine, la pentaéthylènehexamine, la 2,2,4-triméthylhexane-1,6-diamine, la m-xylylènediamine, le 1,2- et le 1,4-diaminocyclohexane, le bis(4-aminocyclohexyl)méthane, le bis(4-amino-3-méthylcyclohexyl)méthane, le 2,2-bis(4-aminocyclohexyl)propane, la 3-aminométhyl-3,5,5-triméthylcyclohexylamine (isophorone diamine) ou un mélange d'au moins deux de ceux-ci.

8. Composition selon l'une quelconque des revendications 1 à 7, **caractérisée en ce que** l'agent de durcissement de la résine époxyde est une amine non modifiée ou une amine qui n'est pas un adduit contenant au moins de la norbornane diamine.

9. Composition selon l'une quelconque des revendications 1 à 8, **caractérisée en ce que** l'accélérateur (ou l'agent d'activation) pour la résine époxyde est choisi parmi le phénol styréné, le résorcinol, l'acide salicylique, l'acide acétylsalicylique, la 2-pipérazin-1-éthylamine, l'acide para-toluènesulfonique et des esters de celui-ci tels que le 4-toluènesulfonate de méthyle, la bis(diméthylaminoéthyl)pipérazine, la N,N'-diméthylpipérazine, le diméthylaminométhylphénol, le 2,4,6-tris(diméthylaminométhyl)phénol, le 2,4,6-tris((3-(diméthylamino)propyl)aminométhyl)phénol, le 1-méthylimidazole, le 1-éthylimidazole, le 1-vinylimidazole, le 2-méthylimidazole, le 2-éthylimidazole, le 2-isopropylimidazole, l'heptadécylimidazole, le 2-éthyl-4-méthylimidazole, le 1-benzyl-2-méthylimidazole, la N,N-diméthylaniline, la N,N-diméthyl-o-,-m-,-p-toluidine, la N,N-diéthylaniline, la N,N-diéthyl-o-,-m-,-p-toluidine, la N,N-di(2-hydroxyéthyl)-p-toluidine, la N,N-bis(2-hydroxyéthyl)-p-toluidine, la N,N-bis(2-hydroxypropyl)-p-toluidine ou un mélange d'au moins deux de ceux-ci.

10. Composition selon l'une quelconque des revendications 1 à 9, **caractérisée en ce que** le composant B comprend un accélérateur (ou agent d'activation) ou un mélange d'au moins deux accélérateurs pour la résine époxyde, choisis parmi
- les amines tertiaires, en particulier la 2-pipérazin-1-éthylamine, le 2,4,6-tris(diméthylaminométhyl)phénol,
- les composés phénoliques modifiés (ou substitués), en particulier le phénol styréné ou le résorcinol,
- les acides sulfoniques et leurs esters, en particulier l'acide para-toluènesulfonique et le 4-toluènesulfonate de méthyle,
- l'acide salicylique,
- les amines aliphatiques linéaires qui ne sont pas des adduits avec un composé époxyde, en particulier la diéthylènetriamine et la triéthylènetétraamine.

11. Composition selon l'une quelconque des revendications 1 à 10, **caractérisée en ce qu'**elle comprend en outre un ou plusieurs agents thixotropes, une ou plusieurs charges, un ou plusieurs inhibiteurs de radicaux libres, un ou plusieurs pigments.

12. Utilisation d'une composition à deux composants selon l'une quelconque des revendications 1 à 11 en tant qu'adhésif, en particulier pour l'ancrage de tiges ou goujons filetés destinés à supporter des charges lourdes dans différents types de matériaux de support, d'une part, et pour des renforts en béton destinés à renforcer des structures et des pièces constituées de béton, d'autre part.

13. Kit adhésif, comprenant une composition selon l'une quelconque des revendications 1 à 11, contenue dans une cartouche à deux compartiments, qui peut être utilisée au moyen d'un mélangeur statique (au moyen duquel les composants A et B sont transportés et mis en contact), et un applicateur permettant d'extruder les composants A et B à partir de leur compartiment respectif.
